# EUROPEAN PATENT APPLICATION

(11) **EP 2 003 766 A2**
(43) Date of publication of application: **17.12.2008**
(21) Application number: 07730421.0
(22) Date of filing: 30.03.2007
(51) Int. Cl.: H02K 53/00, H02K 1/00

(54) **MAGNETIC MOTOR**

(30) Priority: 04.04.2006 ES 200600872
(71) Applicant: Freixas Vila, Ramon, 43424 Tarragona (ES)
(72) Inventor: Freixas Vila, Ramon, 43424 Tarragona (ES)
(86) International application number: PCT/ES2007/000181
(87) International publication number: WO 2007/113357

(57) **Abstract**

The aim is to create a moment by means of magnetism. Motor composed of a rotor and a single stator, in which there are magnets and materials of high magnetic permeability (2). The stator is formed by magnets (1) with magnetic poles arranged in a staggered fashion, increasingly closer to the magnet (3) of the rotor, creating the attraction of the rotor and producing a rotation. Various magnets (3) of the rotor surrounding the end of the stator, when rotating with respect to an axis, will create the motor. It is used to boost torque in bicycles.

## Description

The patent is based within that of technical sector of motors, more specifically in relation to magnetic motors.

### STATE OF THE TECHNIQUE

There are motors whose rotor is made by permanent magnets and on the stator there is the windings , through which the electric current flows, in this type of motor there is usually only one part with magnetic material (magnets) which are generally situated in the rotor.
There are also devices that have magnets in both the rotor and the stator, to create a rotation torque , the device in this document forms part of this second group. If we were to mention other examples we could quote the patents JP56110483 and EP 256132.

### Prior art

Magnetic shields work by attracting the magnetic flux of the magnet.
The patent which mostly coincides with this document is JP56110483; this patent shows an oblique magnet in the stator which attracts the oblique magnet in the rotor when it approaches the stator equally than it attracts the shield when it moves away from the stator, since magnetic shields are attracted to the magnets; this way, the magnetic shield cannot escape the field of the stator magnet. To solve this problem, the advantage provided by the document of the present invention is the possibility of creating a stator with many magnets in an increasingly staggered form and with the pole of the stator to which is attracted the rotor always the closest to the rotor, in order for the rotor to reach the last top magnet with acceleration and overcome the attraction of the magnetic shield. A correct arrangement of the poles is essential, as rotation with respect to a grouping having more than one magnet cannot exist if the rotor pole which first enters the stator and the pole of that stator end have opposite polarity signs (because they attract in the end), or if the pole displayed in every stator magnet closest to the rotor and the rotor pole have the same polarity sign (because they repel each other).

In patent JP56110483, there seems to be only one magnetic pole in the rotor magnet facing the stator because if there were two magnetic poles when the rotor magnet entered the stator they would cause repulsion. Also, if there were two poles in the rotor magnet, the inclined magnetic shield would cover the pole that is attracted to the stator because magnetic shields attract the magnetic flux of the closest magnet.

If the arrangement of poles is changed, a magnet cannot rotate with respect to another if the closest poles have the same polarity sign.

If the direction of turn in patent JP56110483 were the opposite, entering the rotor through the magnetic shield zone first, after on the document of the present invention will be mentioned that the surface of the stator with the two magnetic poles needs to be parallel to the symmetry axis of the stator as in the document of the present invention; the stator pole which has opposite polarity with respect to the rotor, to which is attracted the rotor and is closest to the other stator end, needs to be in a surface parallel to the tangent of the circle described by the rotor because if this surface is oblique there is no power of attraction to the opposite pole located in the other end through which it first enters, since the opposite pole is more low.

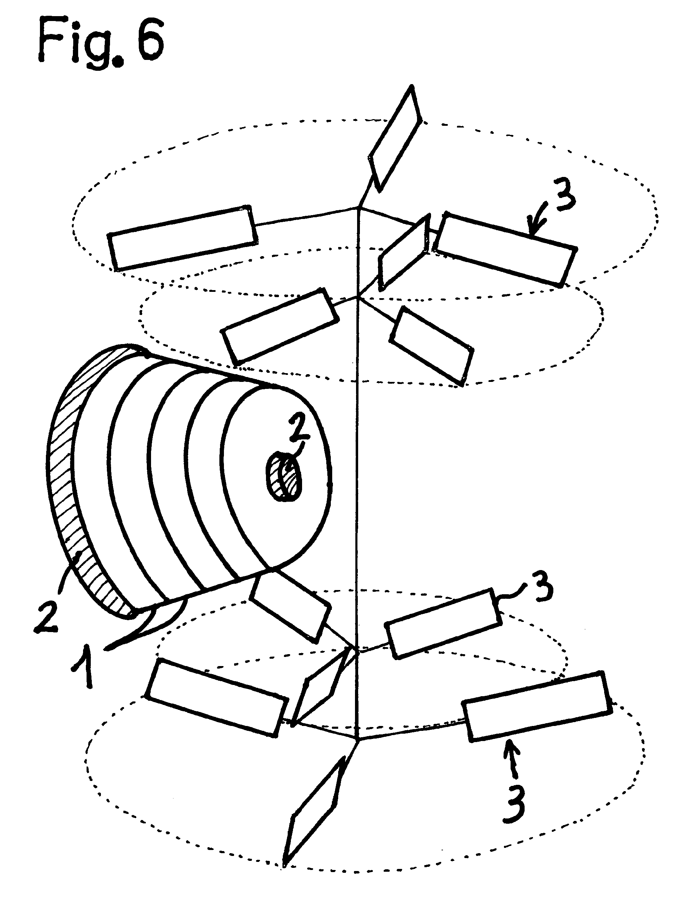

To create a motor, a fix stator and a mobile rotor turning around it are required. In a classical arrangement, the rotor turns around its shaft and the stator components are located in the close areas. However, if magnets are disposed in the rotor and the stator, and taking into account that magnets project magnetic fluxes, an optimal method needs to be found which enables the rotation when the rotor magnets/components enter the stator, which also has magnets. The best way is for the rotor components to turn in the same axis in planes parallel to the symmetry axis of the stator, describing concentric circles around the stator, and more closely embracing the stator end which has the top magnet, the stator being prism-like structure(fig 6). Obvious though it may seem, this arrangement creates rotation with the best magnetic interaction surface between the rotor and the stator, whereas other arrangements reduce in half the rotation torque of the interaction. Therefore, this is one of the most important advantages of the document of the present invention dealing with the creation of a magnetic motor with magnets in the rotor and the stator.

Magnets project fluxes which create magnetic interactions at a certain distance between them. If two magnets are close to each other their magnetic fluxes are added together and they do not have the same effect as if they were separated. For this reason, the creation of a motor with many stator magnets on the same plane like the one in patent JP56110483 is unfeasible, except if the stators are arranged in different planes with respect to a very long rotor shaft, separated by a sufficient distance where their fluxes no longer interact. The advantage provided in the document of the present invention is the arrangement of magnets to create only one stator block in the motor. The stator needs to be prismatic if we intend to make the motor more compact . This avoids having undesired additions between several stators, which invalidate rotation, and needing to extend the shaft of the rotor.

### DESCRIPTION / EXPLANATION

The objective of this device is to create rotation only using the energy of the magnets, without the need for other forms of energy. The device consists of a stator and a rotor, in which there are the magnets for supplying the force necessary for the rotation since magnetic attraction takes place between the rotor and the stator.

### The rotor :

The rotor may comprise high magnetic permeability materials, magnets solely, or a combination of both, depending on the material forming the stator.
A magnet located in the rotor may rotate on an arm around its shaft describing a circle. The magnet may have angle of inclination or have not much inclination, and it may have a cut in the end closest to the stator. Additionally, on some faces the magnet may be shielded by a high magnetic permeability material which prevents too much flux from going out, when reorientating it to other areas, thus the magnetic circuit being closed.

The movement of the rotor is produced by the magnetic attraction between the face of the unshielded magnet and the stator. If the magnet of the rotor is not shielded, the interaction occurs between the rotor magnetic pole which rotates more closely to the stator and the stator.

The rotor components may be created solely by means of high magnetic permeability materials, with no magnets, since these materials have very high attraction to the magnets forming the stator.

### The stator :

The stator comprises a group of magnets and a material with high magnetic permeability, or magnets solely.

The magnets forming the grouping can be rectangular or rings, they can have an angle cut on the side facing the rotor, and they can have a slight acute angle of inclination between them and with respect to the symmetry axis of the stator.

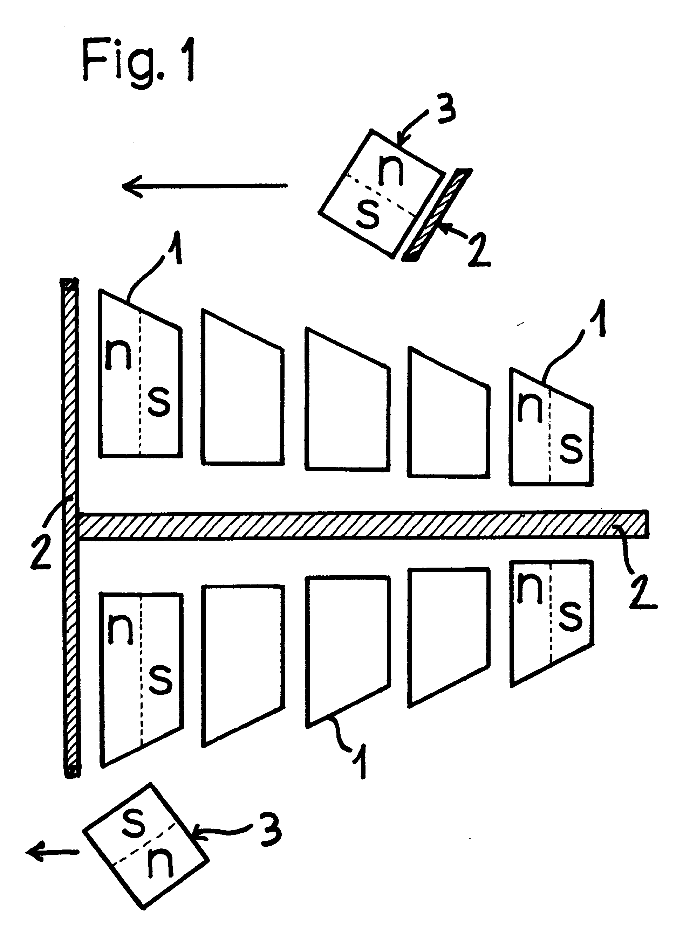

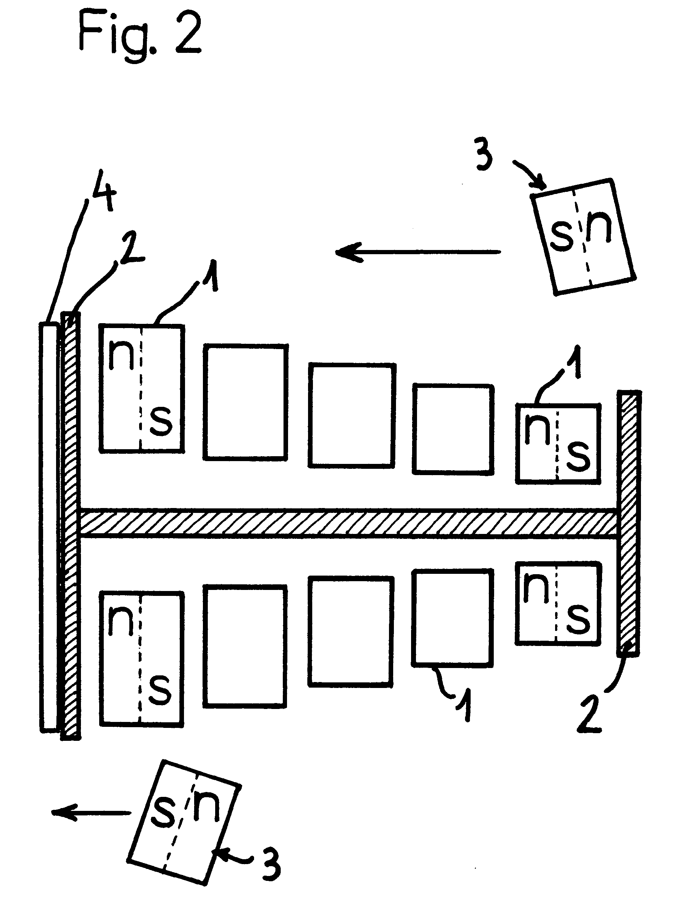

The magnets are disposed quite closely and parallely in attraction mode, in a staggered arrangement where the external poles of each magnet are increasingly further from the stator axis and increasingly closer to the rotor component, up to a maximum limit or top magnet next to which a shield made of a high magnetic permeability material is located in order to cancel the flux outflow in one end of the stator block (fig 1). Consequently, one end of the stator shows a magnetic pole, and the other end shows the opposite pole but it is shielded by the magnetic shield. An appropriate geometry of the magnetic shield makes it possible to direct the flux again to all the magnets and the opposite pole of the stator, thus the magnetic circuit being closed. To better close the magnetic circuit in the stator the high magnetic permeability material can be extended along the stator axis further from the end magnet (fig 1) or, alternatively, another magnetic shield can be placed in that end (fig 2), thus having two magnetic shields with different area in the stator ends. Additionally, if the magnetic shield does not shield the magnetic flux of the largest face of the stator sufficiently, or if we don't want to shield the rotor magnet, a thin magnet can be located very close next to the magnetic shield to repel the rotor once it has passed.

The stator magnets furthest to the rotor component movement may be disposed slightly inclined to prevent the rotor from noticing repulsion when entering through the stator end furthest from the rotation.

If the stator magnets arranged staggeredly have the axial magnetization direction, the side facing the rotor has the two magnetic poles on a surface parallel to the stator axis (fig 2) or, if this surface is inclined (fig 1), the pole closest to the rotor is the one which is attracted to the rotor.
The grouping of many magnets in the stator causes rotor acceleration. One way in which the rotation movement can take place is when the magnet/rotor component enters the stator through the end which has less surface area, and which shows the same magnetic pole as the side of the rotor entering the stator; the magnet is attracted towards the top magnets and the magnetic shield in the other end because there is a magnetic attraction to the last pole of the top magnet closest to the magnetic shield and the rotor, and after passing by the magnetic shield which absorbs the flux in the stator end with the largest surface area, the rotor no longer experiences magnetic interaction with the stator, thus the rotation torque being created.

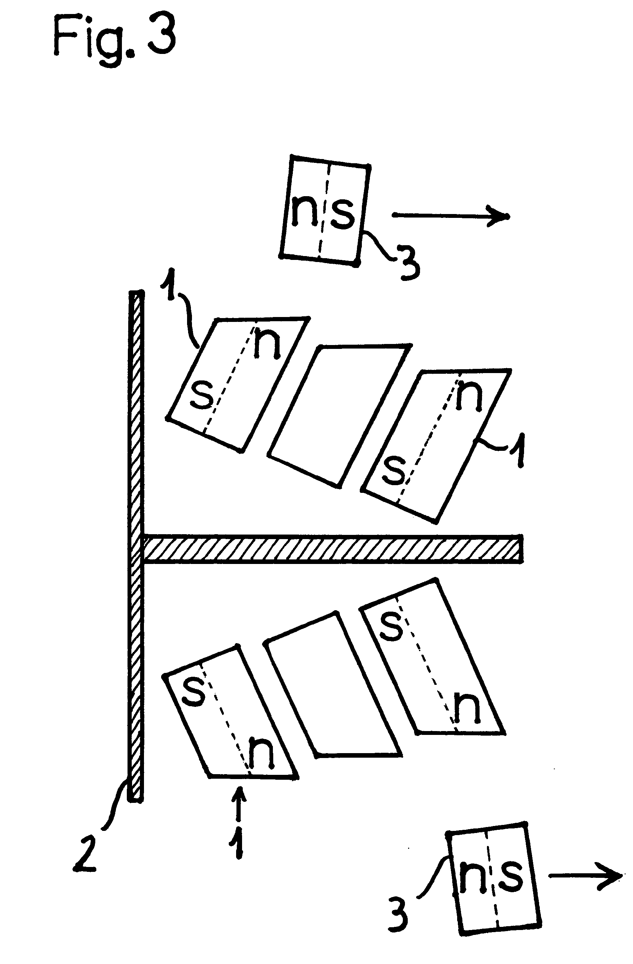

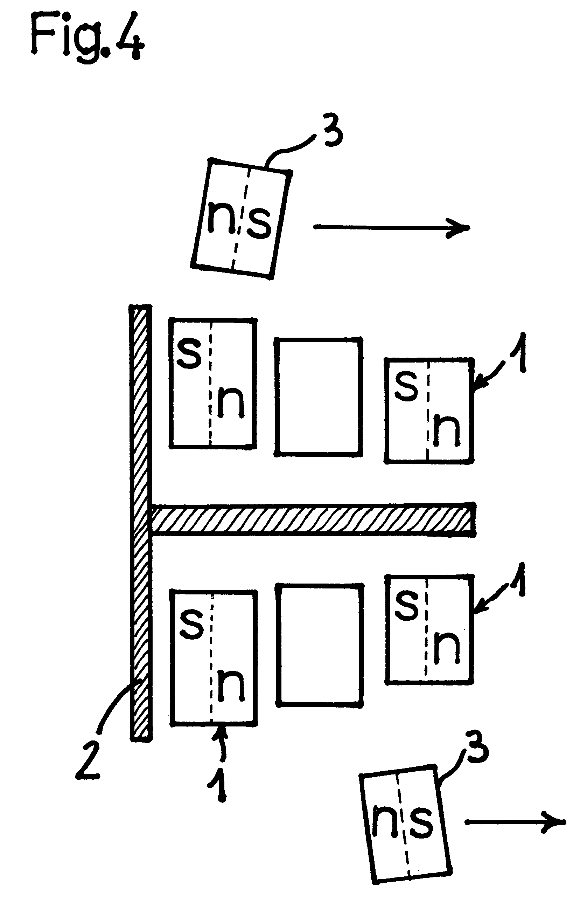

The rotation direction of the rotor depends on the direction of the rotor attraction. For this reason, some figures show the rotor rotating in the opposite direction, entering the magnetic shield zone first (fig 3 and 4). Figure 3, for example, illustrates that if angled magnets with angle of inclination are used in the stator, the rotor is first attracted towards the magnetic shield, then to the opposite pole of the top magnet.

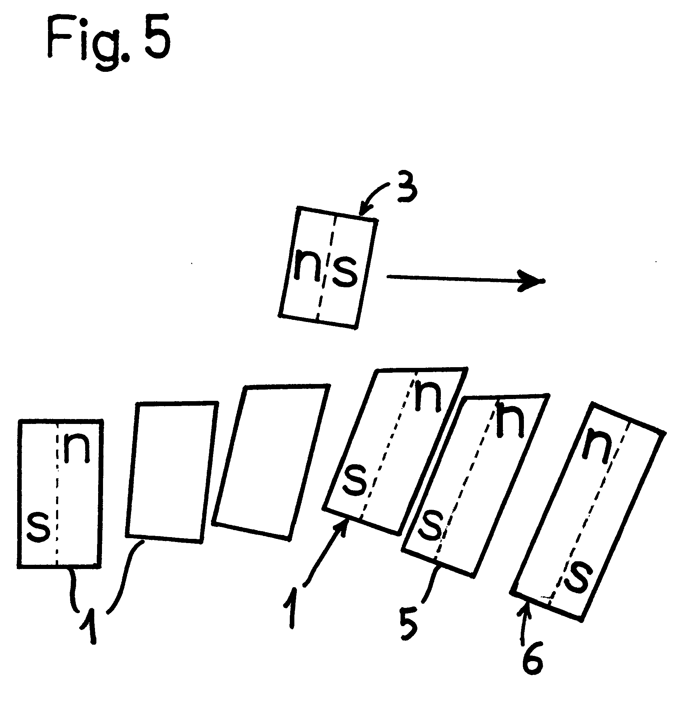

The other means to form the stator is solely with magnets ; the magnets with equal characteristics are staggered like as described above, quite parallel and close to each other in attraction mode, the distance between them lessening progressively with respect to the rotor component, displaying increasing progression up to the top magnet with inclination and interaction surface with angle cut parallel to the stator axis; then, a magnet or group of magnets can be placed in repulsion mode with the top magnet (fig 5) or, alternatively, angled magnets in descending progression next to the top magnet, or a combination of both. This way, the rotor can be repelled after having passed by the top magnet in the stator, rotation torque thus being created. In this variant, the movement of the unshielded rotor occurs when, entering through one of the stator ends, it accelerates to the magnets at the top, and after having passed by this top , other magnets placed in the other end of the stator will cause repulsion to it. The movement here occurs by means of a magnetic interaction, first attraction, then repulsion.

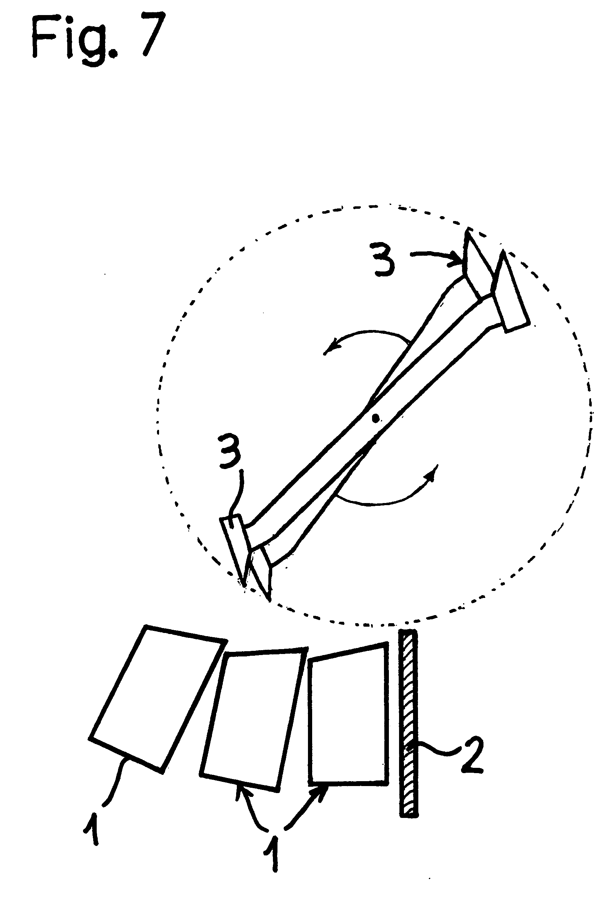

After defining the rotor and the two stator types which can be created, the layout of the two elements needs to be described. The best way for the rotor fluxes to appropriately enter the stator and notice not much repulsion or have surfaces with optimal magnetic interaction would require the rotor components to embrace the stator end which have the top magnet, turning in planes parallel to the symmetry axis of the stator (fig 6); obvious though it may seem, this arrangement between the rotor and the stator is very important, since they are magnets which project fluxes. Moreover, the number of stator blocks being used to form the motor can be reduced in order to avoid having additions of fluxes between the stators. For this reason, generally only one prism-like stator is located in the motor. A more classical arrangement of the motor consists of the rotor components turning around a shaft and a stator block located on a lateral area close to the rotation (fig 7). In order for the rotor to properly enter the stator, angled magnets are needed, arranged in a staggered way like saw teeth, the magnet pole attracting to the rotor being displayed more closely to the rotor.

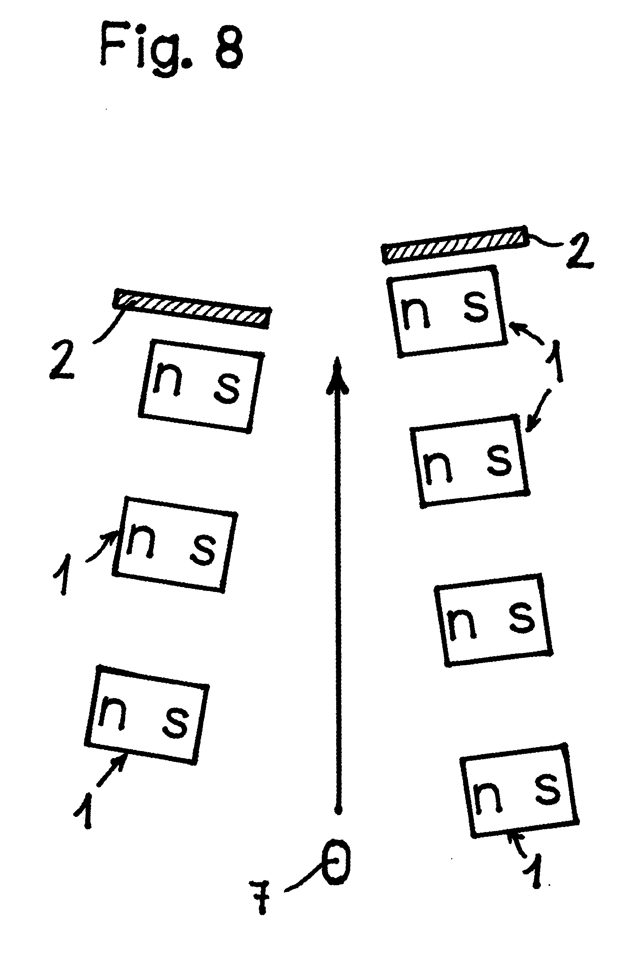

The stator requires the two magnetic poles progressively facing the rotor more closely, even if they are not in the same magnet, as with magnets showing only one pole and which are arranged on both sides of the rotor (fig 8), which also causes attraction to the end shields.

### DESCRIPTION OF THE FIGURES

Figure 1 - The stator is formed by magnets (1) in increasing progression, with an angle cut. The high magnetic permeability material(2) forming the magnetic shield is located on the face with the largest surface area. The magnetic shield extends towards the other stator end along the symmetry axis . The rotor has a magnet shielded by a high permeability material (2).
Figure 2- The stator magnets (1) don't have angle cut. On both ends of the stator there is the high permeability material(2) forming the magnetic shields. Next to the magnetic shield with the largest surface area there is a thin magnet (4). The rotor magnet (3) is unshielded.
Figures 3 and 4 - The rotor magnet (3), which is unshielded, first enters the end where the magnetic shield material(2) is located and it is attracted to the stator magnets (1).
Figure 5 - Increasing arrangement of magnets (1) up to the inclined top magnet, then decreasing arrangement of angled magnets(5) or magnet(6) in repulsion.
Figure 6- The rotor components turn in planes parallel to the symmetry axis of the stator, embracing the stator end which have the top magnet.
Figure 7 - The stator magnets(1) have an angle cut, but they progressively approach the rotor. The material(2) forming the magnetic shield is placed next to the top magnet. The rotor magnets(3) with its arms positioned helicoidally .
Figure 8 - The stator magnets(1) exhibit an only pole alternately, progressively closer and arranged on both sides of the rotor component (7). The stator magnets(1) attract the rotor component(7) towards the top magnet and the material (2) forming the magnetic shields.

### REALIZATION MODE

A motor is created which has a rotor with magnets(3) and only one stator (fig 6). To create the stator the magnets(1) are disposed separated by some distance in order to avoid eddy currents, and parallely in attraction mode and increasing progression on both sides of the stator axis, forming a prism with two different surface area ends, up to a maximum limit or top magnet which is the magnet closest to the turn of the rotor component. Close to this top magnet, a magnetic shield made of high magnetic permeability material(2) is placed quite parallel to the face with the last magnetic pole of the stator in order to decrease the flux outflow from this end of the stator. If magnets(1) exhibiting axial magnetization direction are used, the face with two magnetic poles on its surface is arranged facing the rotor magnet(3) and the pole to which is attracted the rotor component is placed the closest to the magnetic shield and the top magnet (fig 1).

The rotor may comprise magnets(3) and high magnetic permeability materials (2). The distance between the magnet and the shield material can vary. The rotor can also consist of unshielded magnets(3) only, but if there are magnets with axial magnetization direction forming the stator and the rotor, the pole of the rotor magnet(3) first entering the stator magnets(1) is the one having the same polarity as the end through which it enters, and the one which is attracted to the pole of the top magnet with opposite polarity which is closest to the other stator end.

Depending on the inclination of the rotor magnet(3) different direction of turn may exist. In figures 1 and 2, for example, the rotor magnet(3) is slightly inclined to the stator end with the least surface area through which the rotor magnet(3) first enters in its rotation. Alternatively, as shown in figures 3 and 4, the first pole of the rotor magnet(3) first enters through the end of the magnetic shield and is attracted to the opposite pole of the top magnet closest to the other stator end, for this it is necessary that the surface with the two magnetic poles of the stator facing the rotor needs to be parallel to the symmetry axis of the stator, and generally parallel to the tangent of the circle described by the rotor at the point of the magnetic shield, as there is no power of the attraction if this surface is oblique.

The rotor components are disposed in arms which can turn with respect the same shaft describing concentric circles around to the prism-like stator. The rotor components need to embrace the stator by being placed more closely to the top magnets and the magnetic shield in one end of the stator than in the other end, turning in planes parallel to the symmetry axis of the only stator in the motor.

### INDUSTRIAL APPLICATION

Currently, the motor does not fully work as desired. The exact powers of magnets which facilitate a more autonomous rotation as well as the degree of load which the magnets can carry in order not to demagnetize may be found out in the future; furthermore, the motor shows an increase in temperature.

It would consist of a device which would help the rotation torque, as it does not work as an autonomous motor at present. It is difficult to pass the rotor over the stator magnets and it needs help. For this reason, a device is defined which could be used in the pedalling of a bicycle, as the process is actually helped with the pedal. For the time being, a hard rotation torque can be obtained after noticing a break in the rotation, at very low rotation.

## Claims

1. Magnetic motor, which uses the magnetic field energy of magnets comprising the rotor and the stator; the rotor turns with respect to the stator around a turn shaft. The rotor may consist solely of magnets(3), solely of high magnetic permeability materials(2), or a combination of both. The rotor and stator magnets have magnetic poles separated by a distance, producing magnetic interaction between both components which is first attraction, rotation torque thus being created; **characterized in that** there is at least one prism stator with the two opposite poles having different distance to the rotor magnet(3) / rotor component; and **characterized in that** a first zone of the stator is formed of a grouping of magnets(1) in a staggered arrangement with respect to a symmetry axis in attraction mode, which are quite parallel to each other up to a top magnet in the stator, which is the one whose magnetic interaction surface is closest to the rotor magnet(3) / rotor component. A second zone of the stator is in the other stator end, next to the top magnet, and it includes magnets(6) or high magnetic permeability materials(2).

2. Magnetic motor, as defined in claim 1, **characterized** because if there are several magnets in the second zone of the stator, the top magnet is oblique with respect to the interaction surface, which faces the rotor parallely to the symmetry axis of the stator ; the device being further **characterized in that** next to the top magnet, there are magnets(5) in the second zone of the stator which have angle cut in descending progression with respect to the rotor component, or there is at least one magnet(6) in repulsion mode with the top magnet, or a combination of both.

3. Magnetic motor, as defined in claim 1, **characterized** because if the second zone of the stator is made of high magnetic permeability materials(2), they are arranged with the largest surface being very parallel and close to the pole of the top magnet in order to create at least one magnetic shield which avoids the flux going out from that end.

4. Magnetic motor, as defined in claims 1, 3, **characterized** because if the high magnetic permeability material(2) does not shield sufficiently the magnetic flux of the stator or more magnetic interaction is needed between the rotor and the stator, a very thin magnet(4) is placed very close to the magnetic shield in the second zone of the stator; this magnet(4) is the stator end, and it acts as the top magnet.

5. Magnetic motor, as defined in claim 1, **characterized** because if the magnets(1) forming the first zone of the stator have the axial magnetization direction, the side facing the rotor component has the two magnetic poles on a surface parallel to the symmetry axis of the stator with the pole attracting to the rotor component closest to the top magnet; or if this surface is oblique, the pole which is closest to the rotor is the one which is attracted to the rotor.

6. Magnetic motor, as defined in claims 1, 5, **characterized** because the pole of the rotor magnet(3) which first enters the stator has the same magnetic polarity as the magnet(1) pole located in the stator end through which it enters the stator.

7. Magnetic motor, as defined in claims 1,2,3,5, 6, **characterized** because the rotation movement occurs due to attraction when the magnet(3) pole of the rotor which first enters one stator end is attracted to the opposite pole of the top magnet which is the closest to the other end.

8. Magnetic motor, as defined in claims 1, 3, 6, 7, **characterized** because if the pole of the rotor magnet(3) in its rotation first enters the end where the magnetic shield is located, and it is attracted to the opposite pole of the top magnet, the surface of interaction of the stator top magnet with the two magnetic poles facing the rotor is parallel to the symmetry axis of the stator; generally parallel to the tangent to the circle described by the rotor when its radius coincides with the top magnet.

9. Magnetic motor, as defined in claims 1,2,4,5,6,7, **characterized** because the rotor magnets(3) / rotor components turn over the stator magnets(1) with an interaction surface closer to the top magnets than to the other stator end.

10. Magnetic motor, as defined in previous claims, **characterized** because the best means to make the motor more compact is with only one stator; the rotor components need to be arranged in arms on different planes on a same rotation axis, describing concentric circles on different planes parallel to the symmetry axis of the stator, embracing the only stator, which is a prismatic structure.
